# FASCICULE DE BREVET EUROPEEN

(11) **EP 3 935 422 B1**
(45) Date de publication et mention de la délivrance du brevet: **07.06.2023**
(21) Numéro de dépôt: 20719681.7
(22) Date de dépôt: 27.02.2020
(51) Int. Cl.: G02B 3/00, G02B 5/30, G02B 30/27, G02F 1/1335, H04N 13/305

(54) **PROCÉDÉ DE FABRICATION D'UN ÉCRAN AUTOSTÉRÉOSCOPIQUE ET PROCÉDÉ DE TRANSFORMATION D'UN ÉCRAN D'AFFICHAGE D'UNE IMAGE BIDIMENSIONNELLE EN UN ÉCRAN D'AFFICHAGE D'UNE IMAGE AUTOSTÉRÉOSCOPIQUE**
VERFAHREN ZUR HERSTELLUNG EINES AUTOSTEREOSKOPISCHEN BILDSCHIRMS UND VERFAHREN ZUR UMWANDLUNG VON EINEM BILDSCHIRM ZUR ANZEIGE EINES ZWEIDIMENSIONALEN BILDES IN EINEN BILDSCHIRM ZUR ANZEIGE EINES AUTOSTEREOSKOPISCHEN BILDES
METHOD FOR MANUFACTURING AN AUTOSTEREOSCOPIC SCREEN AND METHOD FOR CONVERTING FROM A SCREEN FOR DISPLAYING A TWO-DIMENSIONAL IMAGE TO A SCREEN FOR DISPLAYING AN AUTOSTEREOSCOPIC IMAGE

(30) Priorité: 04.03.2019 FR 1902205
(43) Date de publication de la demande: 12.01.2022
(73) Titulaire: Alioscopy, 75020 Paris (FR)
(72) Inventeur: ALLIO, Pierre, 75020 PARIS (FR)
(74) Mandataire: Bringer IP
(86) Numéro de dépôt international: PCT/FR2020/050388
(87) Numéro de publication internationale: WO 2020/178506

(56) Documents cités:
- WO-A1-00/17677
- WO-A2-2007/029206
- FR-A1- 2 887 998

## Description

### Domaine technique de l'invention

L'invention concerne le domaine de l'autostéréoscopie et plus particulièrement la fabrication d'un écran autostéréoscopique et la transformation d'un écran d'affichage d'une image bidimensionnelle en un écran d'affichage d'une image autostéréoscopique.

### Arrière-plan technologique

L'autostéréoscopie est une technique permettant l'affichage d'images en relief sans exiger le port de lunettes spéciales de la part de l'observateur. Cette technique est connue en elle-même, en particulier des documents de brevets WO2006/024764, WO2014/041504, WO2013/140363, WO2014/016768 au nom du demandeur.

D'une manière générale, une image autostéréoscopique est constituée d'une pluralité de bandes d'images élémentaires imbriquées selon un schéma de mixage prédéterminé, correspondant à des vues d'un même objet ou d'une même scène selon des points de vue différents. Un dispositif sélecteur, typiquement constitué par un réseau de lenticules cylindriques ou une barrière de parallaxe, est disposé devant l'écran d'affichage de manière à permettre la projection d'un couple d'images élémentaires correspondant à deux points de vue différents de la scène, respectivement vers les deux yeux de l'observateur, ce qui crée une impression de relief dans le cerveau de l'observateur.

A ce titre, le demandeur a déjà proposé un écran autostéréoscopique comprenant une matrice de pixels agencés par lignes et par colonnes, chaque pixel étant composé d'une pluralité de sous-pixels de couleurs différentes. L'écran est en outre surmonté d'un réseau de lenticules cylindriques identiques présentant chacune une focale configurée pour pouvoir renvoyer à l'infini les rayons lumineux qui proviennent de l'écran. La largeur des lentilles est approximativement égale à la largeur de N sous-pixels, N étant le nombre de points de vue (dans la mesure où le demandeur préconise l'utilisation d'un seul sous-pixel par point de vue par lentille et par ligne horizontale au lieu d'un pixel). Cela étant, d'autres configurations sont possibles sans que cela ne modifie sensiblement l'effet procuré. Le pas du réseau de lenticules cylindriques est précisément calculé de telle sorte que l'observateur voit, à une distance prédéterminée de l'écran (dite distance de teinte plate, qui est par exemple fixée à 85cm), les images se succéder tous les 6,5cm (écart moyen entre les yeux, choisi comme base de calcul), grâce à l'effet loupe du réseau de lenticules.

Cet effet loupe résulte du fait qu'une lentille placée à la bonne distance (sa focale) grossit le sous-pixel qui se trouve dans l'alignement de son axe optique et de la pupille de l'oeil de l'observateur. Si la lentille grossit N fois, le sous-pixel vu à travers la lentille est perçu N fois plus large qu'il n'est en réalité et masque pour l'oeil qui en reçoit la lumière à travers cette lentille les N-1 autres sous-pixels qui ne sont pas dans l'alignement décrit précédemment.

Ainsi, l'observateur ne perçoit qu'un Nième de la résolution de l'écran pour chaque oeil. Ces points associés pour former une image ou un point de vue sont tous grossis N fois horizontalement. Il reste les N-1/N^{ème} de la résolution pour y inscrire N-1 autres points de vue selon la même méthode.

L'une des difficultés rencontrées lors de la réalisation d'un écran autostéréoscopique réside dans l'étape de positionnement et de collage du composant optique sur la surface avant de l'écran. En effet, ce composant optique doit être collé à une distance précise de la surface de l'écran pour permettre l'effet loupe décrit précédemment. En particulier, les épaisseurs traversées optiquement jusqu'à la surface effective des pixels doivent correspondre, au total, et en tenant compte des indices de réfraction de chacun des matériaux traversés, y compris l'air, à la distance focale des microlentilles du réseau lenticulaire.

Le profil des microlentilles, le plus souvent cylindrique, peut être rayonné. Certains composants optiques, de profil prismatique, correspondent aux cordes, en nombre égal au nombre de points de vue souhaité, de l'arc de cercle de même rayon que dans le cas des microlentilles à profil cylindrique.

Pour certains écrans, la distance focale des lentilles correspond à l'épaisseur optique à traverser pour atteindre les pixels de l'écran. Aussi, les lentilles doivent être montées tournées vers l'écran, au contact de ce dernier.

La difficulté est alors de positionner le réseau lenticulaire de sorte que les sommets des lentilles soient en contact avec l'écran en minimisant l'apparition des anneaux de Newton (figure d'interférence formée d'une série d'anneaux concentriques ou de bandes en rapport avec la géométrie des zones de contact, alternativement lumineux, sombres et colorées, centrées sur le point de contact entre la surface sphérique ou cylindrique de la lentille et la surface plane de l'écran). Lorsque l'écran est éteint, la surface apparait striée en présentant des zones sombres et parfois colorées en alternance de lignes plus grises au pas des lentilles. Ce phénomène évolue et s'accentue dans le temps.

Les inventeurs ont donc cherché à améliorer les procédés actuellement disponibles pour fabriquer des écrans autostéréoscopiques, en particulier lorsque les lentilles cylindriques doivent être collées au plus près de l'écran.

En particulier, les inventeurs ont cherché à développer un procédé de fabrication qui permet d'obtenir un écran stable dans le temps.

### Objectifs de l'invention

L'invention vise donc à fournir un procédé de fabrication d'un écran autostéréoscopique qui pallie au moins certains des inconvénients des solutions connues.

L'invention vise en particulier à fournir, dans au moins un mode de réalisation, un procédé de fabrication d'un écran autostéréoscopique qui est simplifié par rapport aux procédés actuellement mis en oeuvre pour la fabrication d'un écran autostéréoscopique.

L'invention vise également à fournir, dans au moins un mode de réalisation, un procédé de fabrication d'un écran autostéréoscopique qui permet d'obtenir un écran stable dans le temps.

L'invention vise également à fournir, dans au moins un mode de réalisation, un procédé de fabrication d'un écran autostéréoscopique qui permet d'obtenir un écran dont l'aspect est amélioré, qu'il soit allumé ou éteint.

L'invention vise aussi à fournir un procédé de transformation d'un écran d'affichage d'une image bidimensionnelle en écran d'affichage d'une image autostéréoscopique.

L'invention vise aussi à fournir, dans au moins un mode de réalisation, un procédé qui puisse être mis en oeuvre par les fabricants d'écrans standards sans modification substantielle du procédé de fabrication.

### Exposé de l'invention

Pour ce faire, l'invention concerne un procédé de fabrication d'un écran d'affichage d'une image autostéréoscopique comprenant les étapes consistant à :
- sélectionner une dalle de pixels agencés par lignes et par colonnes, chaque pixel étant composé d'une pluralité de sous-pixels de couleurs différentes,
- sélectionner un film de polarisation présentant un premier axe optique,
- fabriquer un réseau lenticulaire directement sur ledit film de polarisation sélectionné pour former un film composite, dit film optique, ledit réseau lenticulaire présentant un deuxième axe optique,
- coller ledit film optique directement sur ladite dalle de pixels sélectionnée de manière à obtenir un écran d'affichage polarisant et lenticulaire présentant deux axes optiques associés respectivement à une fonction de polarisation et à une fonction autostéréoscopique.

Un procédé selon l'invention permet donc de fabriquer directement le réseau lenticulaire à la surface de l'écran par le biais d'un film de polarisation, aussi désigné par les termes de film polariseur.

Un procédé selon l'invention permet donc de simplifier la fabrication d'un écran autostéréoscopique en supprimant l'étape de fixation d'un réseau lenticulaire préalablement conçu sur la surface d'un écran et en remplaçant cette étape par une étape de fabrication du réseau directement sur un film de polarisation.

Un procédé selon l'invention permet donc de bénéficier de toute l'expérience acquise par les fabricants d'écran 2D, en particulier en ce qui concerne la fabrication et la pose des films de polarisation, pour fabriquer des écrans autostéréoscopiques. Le film optique formé ne modifie ni les propriétés mécaniques du film de polarisation, ni la stabilité du film composite dans le temps. Un procédé de fabrication selon l'invention permet donc de fournir des écrans autostéréoscopiques, stables dans le temps.

En outre, un procédé selon l'invention supprime les risques de voir apparaitre des anneaux de Newton lorsque les lentilles du réseau doivent être en contact avec la surface de l'écran. Un procédé selon l'invention permet donc d'améliorer l'aspect des écrans fabriqués par rapport aux écrans connus, à la fois lorsqu'ils sont allumés et lorsqu'ils sont éteints.

Un procédé selon l'invention permet également de conférer une double fonction au film optique, à savoir une fonction de polarisation et une fonction de composant optique permettant la formation d'une image autostéréoscopique. Ainsi, la pose d'un film optique selon l'invention sur une dalle de pixels permet de conférer à l'écran à la fois ses propriétés de polarisation et ses propriétés autostéréoscopiques.

Le film optique obtenu au cours du procédé selon l'invention est caractérisé par le fait qu'il présente au moins deux axes optiques associés à deux fonctions différentes : l'axe de polarisation et l'axe des micro lentilles du réseau lenticulaire formé par le procédé selon l'invention.

Avantageusement et selon l'invention, ladite étape de fabrication d'un réseau lenticulaire directement sur ledit film de polarisation comprend les sous-étapes consistant à :
- appliquer une couche de résine transparente polymérisable sur ledit film de polarisation,
- implanter ledit réseau lenticulaire dans ladite couche de résine polymérisable,
- polymériser ladite résine polymérisable de manière à obtenir un film composite transparent et stable intégrant ledit réseau lenticulaire.

Un procédé selon cette variante est particulièrement simple à mettre en oeuvre dans la mesure où il consiste à appliquer une couche de résine polymérisable sur le film de polarisation et à la mettre en forme pendant qu'elle est fluide par impression, gravage après durcissement, sérigraphie ou tout moyen équivalent pour obtenir directement le réseau lenticulaire visé après polymérisation de ladite résine.

La polymérisation de la résine peut être obtenue par durcissement par lumière UV, par durcisseur chimique ou par application d'une chaleur pendant les opérations de moulage, ou par tout moyen équivalent.

On peut améliorer l'adhérence de cette résine fixée sur le film de polarisation par tout type de moyen, tel que par exemple, un traitement corona, l'utilisation d'un primaire d'accrochage, l'utilisation de solvants, un plasma à pression atmosphérique, voire un plasma sous vide.

Un procédé selon cette variante permet de former tout type de réseau lenticulaire sur le film composite et notamment un réseau rayonné ou un réseau à facettes.

En outre, un procédé selon cette variante permet de fabriquer de manière simple tout type de réseau, quel que soit l'angle d'inclinaison des lentilles souhaité par rapport à la direction des colonnes de la dalle de pixels.

Selon une variante avantageuse de l'invention, ladite résine transparente polymérisable est une résine (mono-composant ou bi-composants), polymérisable par UV ou par réaction chimique résultant d'un mélange avec un autre composant, ou par apport de chaleur.

Dans le cas d'une résine UV transparente, la polymérisation se fait avantageusement au travers du film de polarisation, par le biais d'une lampe émettant à la fois dans l'UV et dans le visible.

L'étape consistant à implanter ledit réseau lenticulaire dans ladite couche de résine peut consister à mettre en oeuvre l'une des étapes suivantes :
- laminer ledit film de polarisation avec un cylindre gravé aux formes et dimensions du réseau lenticulaire souhaité,
- imprimer ledit film de polarisation au moyen d'une imprimante à vernis UV un motif aux formes et dimensions du réseau lenticulaire souhaité,
- sérigraphier ledit film de polarisation aux formes et dimensions du réseau lenticulaire souhaité,
- appliquer sur ledit film de polarisation un moule aux formes et dimensions du réseau lenticulaire souhaité.

Bien entendu, d'autres moyens peuvent être utilisés pour former le réseau lenticulaire dans la couche de résine apposée sur le film de polarisation.

Avantageusement et selon l'invention, ledit film de polarisation sélectionné est formé d'un film d'oxyde de polyvinyle étiré et laminé entre deux films de tri acétate de cellulose.

Selon cette variante, il est aussi possible de modifier directement la surface du film de tri acétate de cellulose par le réseau lenticulaire.

L'invention concerne aussi un procédé de transformation d'un écran d'affichage d'une image bidimensionnelle, dit écran 2D, en un écran d'affichage d'une image autostéréoscopique, dit écran 3D, ledit écran 2D comprenant au moins une couche de cristaux liquides formant une dalle de pixels, surmontée au moins d'un film de polarisation, ledit procédé comprenant les étapes consistant à :
- décoller ledit film de polarisation dudit écran 2D,
- sélectionner un film de polarisation,
- fabriquer un réseau lenticulaire directement sur ledit film de polarisation sélectionné pour former un film, dit film optique,
- coller ledit film optique directement sur ladite dalle de pixels dudit écran 2D.

Un procédé selon l'invention permet donc d'utiliser un écran standard dédié à l'affichage d'une image 2D et de le transformer en un écran dédié à l'affichage d'une image autostéréoscopique. Cette transformation consiste à retirer le film de polarisation et à le remplacer par un film de polarisation sur lequel un réseau lenticulaire est implanté suivant un procédé de fabrication selon l'invention.

Aussi, les avantages d'un procédé de fabrication d'un écran d'affichage d'une image autostéréoscopique selon l'invention s'appliquent *mutatis mutandis* à un procédé de transformation d'un écran selon l'invention.

Un procédé selon l'invention permet de fabriquer de manière simplifiée, et répétitive des écrans autostéréoscopiques stables qui peuvent être utilisés dans diverses applications, et notamment des applications automobiles, médicales, aéronautiques, téléphoniques, etc.

Avantageusement et selon l'invention, ladite étape de fabrication d'un réseau lenticulaire directement sur ledit film de polarisation comprend les sous-étapes consistant à :
- appliquer une couche de résine transparente polymérisable sur ledit film de polarisation,
- implanter ledit réseau lenticulaire dans ladite couche de résine polymérisable,
- polymériser ladite résine polymérisable de manière à obtenir un film composite transparent et stable intégrant ledit réseau lenticulaire.

L'invention concerne également un procédé de fabrication d'un écran d'affichage d'une image autostéréoscopique et un procédé de transformation d'un écran d'affichage caractérisés en combinaison par tout ou partie des caractéristiques mentionnées ci-dessus ou ci-après.

### Liste des figures

D'autres buts, caractéristiques et avantages de l'invention apparaîtront à la lecture de la description suivante donnée à titre uniquement non limitatif et qui se réfère aux figures annexées dans lesquelles :
[Fig. 1] est une vue schématique synoptique d'un procédé selon un mode de réalisation de l'invention.
[Fig. 2] est une vue schématique d'un dispositif permettant de mettre en oeuvre l'étape d'implantation d'un réseau lenticulaire sur un film de polarisation d'un procédé selon un mode de réalisation de l'invention.

### Description détaillée d'un mode de réalisation de l'invention

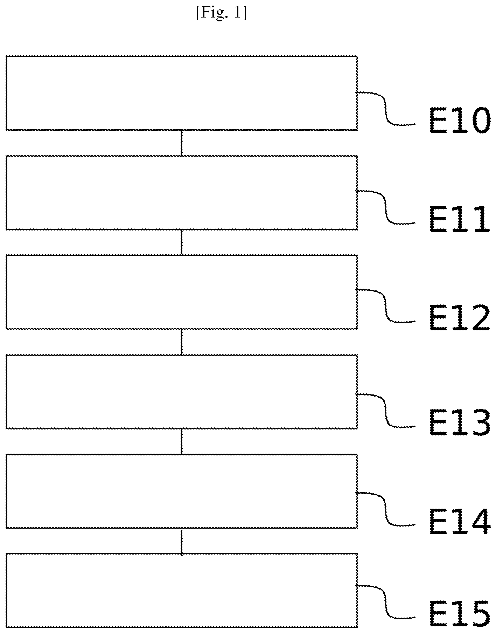

Tel que représenté sur la figure 1, un procédé selon un mode préférentiel de réalisation comprend une étape E10 de sélection d'une dalle de pixels, une étape E11 de sélection d'un film de polarisation, une étape E12 d'application d'une couche de résine polymérisable directement sur le film de polarisation sélectionné, une étape E13 d'implantation d'un réseau lenticulaire dans la couche de résine déposée sur le film de polarisation, une étape E14 de polymérisation de la résine de manière à obtenir un film composite transparent et stable intégrant le réseau lenticulaire et une étape E15 de collage du film composite ainsi formé sur la dalle de pixels sélectionnée.

Au moins un mode de réalisation de chacune de ces étapes va maintenant être décrit de manière détaillée.

L'étape E10 de sélection d'une dalle de pixels consiste à choisir une dalle de pixels aux dimensions compatibles avec l'application visée. Une telle dalle de pixels peut être de tout type connu. La dalle comprend des pixels agencés par lignes et par colonnes et chaque pixel est composé d'une pluralité de sous-pixels de couleurs différentes.

L'étape E11 de sélection d'un film de polarisation consiste à choisir un film de polarisation, aux dimensions compatibles avec la dalle de pixels sélectionnée.

Dans le cas d'un procédé de transformation d'un écran 2D en un écran 3D, les étapes E10 et E11 consistent à décoller le film de polarisation de l'écran 2D considéré et à sélectionner comme dalle de pixels la dalle de l'écran 2D à transformer.

Il est aussi possible de coller sur ce film de polarisation un film transparent pour former un nouveau film de polarisation qui est ensuite traité par le procédé selon l'invention. Il est également possible de fabriquer directement le réseau lenticulaire sur un film transparent et de le coller ensuite directement sur un polariseur non collé sur l'écran. Cette variante permet ainsi d'obtenir un nouveau film composite qui est collé sur un écran n'ayant plus de polariseur, ou sur un écran déjà équipé d'un polariseur, doublant ainsi l'épaisseur du polariseur initial en lui rajoutant l'épaisseur et la fonction du film transparent additionnel lenticulaire. Cela peut notamment être nécessaire si le réseau lenticulaire à implanter sur le film de polarisation ne doit pas être en contact direct avec le film de polarisation d'origine, mais légèrement espacé de ce dernier, compte tenu des exigences optiques de focale notamment.

Il est également possible d'adapter un procédé de transformation d'un écran 2D en un écran 3D selon l'invention en formant un réseau lenticulaire sur un film transparent, au lieu de le former sur un film de polarisation, et de coller ce réseau lenticulaire ainsi formé directement sur la surface de l'écran 2D dont on a retiré le film de polarisation d'origine. Le procédé de transformation consiste ensuite à venir coller le film de polarisation préalablement décollé de l'écran 2D ou un autre film de polarisation, monté sur un substrat rigide, sur le réseau lenticulaire collé sur la dalle de pixels de l'écran 2D.

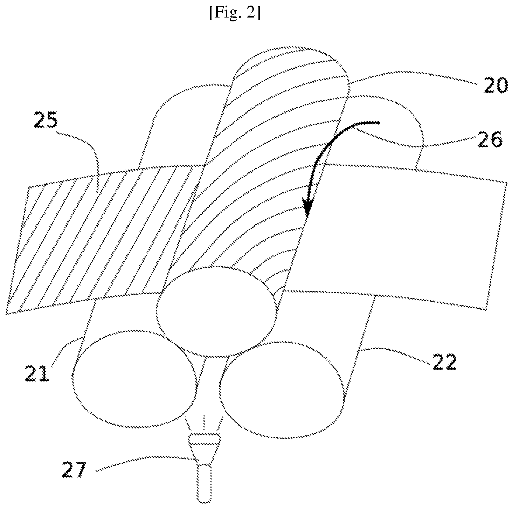

Selon un mode de réalisation de l'invention, l'étape E12 d'application d'une couche de résine sur le film de polarisation, l'étape E13 d'implantation d'un réseau lenticulaire sur ledit film de polarisation et l'étape E14 de polymérisation de la résine sur le film de polarisation, sont imbriquées et réalisées de manière coordonnée. Cette étape peut par exemple être mise en oeuvre par le dispositif représenté schématiquement sur la figure 2.

Pour ce faire, un cylindre métallique gravé 20 (présentant un état de surface poli glass et des sillons de formes et dimensions exactement conformes aux lentilles du réseau lenticulaire à réaliser) est posé sur une plateforme constituée de deux rouleaux 21, 22, par exemple en caoutchouc, qui s'étendent chacun selon une même direction. Les axes des deux rouleaux sont donc parallèles. Chaque rouleau 21, 22 est entrainé en rotation par un moteur électrique, non représenté sur la figure 2 (bien entendu, tout autre moyen d'entrainement en rotation de chacun des rouleaux est possible pour atteindre un résultat sensiblement identique). Selon une autre variante décrite ultérieurement, seul un rouleau en caoutchouc est motorisé.

Les rouleaux 21, 22 sont espacés l'un de l'autre selon la direction perpendiculaire à la direction de leur axe de rotation, de manière à permettre le passage d'une lumière UV ou d'une lumière visible, mais suffisamment proche pour retenir le cylindre métallique gravé 20, qui est posé sur les deux rouleaux.

Le film de polarisation 25 sélectionné (ou le film de polarisation décollé de l'écran 2D dans le cas d'une transformation d'un écran 2D en un écran 3D) est convoyé entre les deux rouleaux en caoutchouc 21, 22 et le cylindre gravé 20. En d'autres termes, le film de polarisation 25 se retrouve enserré entre les deux rouleaux en caoutchouc par le dessous, et le cylindre métallique gravé par le dessus.

Le film de polarisation est maintenu tendu pour être tangent aux deux rouleaux en caoutchouc et au cylindre métallique gravé. Cette action de mise en tension du film de polarisation peut être obtenue par tout type de moyen.

La résine UV est ensuite déposée au contact du cylindre métallique sur la surface du film de polarisation, en amont de ce cylindre. La flèche 26 représente schématiquement le versement de la résine en amont du cylindre. L'amont du cylindre est défini par le sens de rotation du cylindre et de l'avance du film de polarisation (de la droite vers la gauche dans la représentation de la figure 2). En d'autres termes, on dépose la résine juste avant que le film 25 ne vienne passer sous le cylindre 20. Ce déplacement du film de polarisation selon une direction, dite direction d'avancement, perpendiculaire à l'axe de rotation des rouleaux en caoutchouc et du cylindre gravé est obtenu par frottement du film entre les rouleaux en caoutchouc et le cylindre gravé.

La rotation synchronisée des deux rouleaux 21, 22 en caoutchouc, du cylindre gravé 20 et du déplacement du film de polarisation 25 le long de la direction d'avancement force la résine à passer sous le rouleau cylindrique gravé 20.

Selon une variante de l'invention, seul un rouleau en caoutchouc est motorisé et entraine par frottement le film gravé, le cylindre gravé et l'autre rouleau en caoutchouc.

En passant sous le cylindre métallique entre ce dernier et le film tendu à sa surface, la résine polymérise et se fige par le flux de lumière UV et/ou de lumière visible qu'elle reçoit entre les rouleaux de caoutchouc qui forment ainsi ensemble un diaphragme.

En fonction de la résine utilisée, il peut être nécessaire de traiter la surface du cylindre gravé pour faire en sorte que la résine adhère mieux au film de polarisation qu'au cylindre métallique de telle manière que le film transporte la résine polymérisée lors de sa sortie d'entre le cylindre gravé et les rouleaux en caoutchouc.

Le film de polarisation 25 ainsi obtenu présente à sa surface le négatif des gravures du cylindre 20, en matière transparente, formant un réseau lenticulaire parfaitement conforme en pas et en focale au réseau lenticulaire visé.

Ainsi et tel que schématiquement représenté sur la figure 2, le film de polarisation 25 en sortie de dispositif (à gauche sur la figure) présente un réseau lenticulaire à la surface du film alors que la surface du film en amont du dispositif est exempte de réseau.

L'émission de lumière 27 UV et/ou visible peut être obtenue par tout moyen connu. Le procédé peut néanmoins être facilité en évitant qu'une élévation de température pendant les différentes étapes du procédé décrit entraine des modifications géométriques du cylindre métallique et/ou du film de polarisation. Aussi, un filtre infrarouge et une ventilation peuvent avantageusement être mis en oeuvre lors des opérations d'implantation du réseau lenticulaire pour éviter une telle élévation de température et ainsi améliorer les résultats du procédé selon ce mode de réalisation, notamment.

Enfin, la dernière étape E15 de collage du film composite ainsi formé sur la dalle de pixels sélectionnée peut être réalisée par tout moyen connu. En particulier, cette étape de collage peut être mise en oeuvre par les mêmes moyens que l'étape de collage d'un film de polarisation classique sur une dalle de pixels 2D standard. C'est notamment l'un des avantages d'un procédé selon l'invention qui peut être, sans difficultés particulières, intégré à un procédé de fabrication d'écran 2D en modifiant simplement l'étape de fabrication du film de polarisation, pour concevoir des écrans autostéréoscopiques, réduisant ainsi substantiellement les coûts de fabrication de tels écrans.

Le procédé décrit est uniquement un mode de réalisation de l'invention. Il est également possible de réaliser l'invention en remplaçant l'utilisation d'un cylindre métallique gravé par la mise en oeuvre d'une imprimante à vernis UV directement sur le film de polarisation pour former le réseau lenticulaire souhaité. Il est également possible de sérigraphier ledit film de polarisation aux formes et dimensions du réseau lenticulaire souhaité. Il est aussi possible d'appliquer sur le film de polarisation un moule aux formes et dimensions du réseau lenticulaire souhaité.

Selon un autre mode de réalisation, il est également possible de réaliser le réseau lenticulaire avec une résine UV à indice de réfraction relativement haut avec un profile de lentille correspondant à une focale beaucoup plus courte que celle souhaitée. Il est ensuite possible de modifier la focale en noyant le premier réseau lenticulaire avec une résine d'indice de réfraction beaucoup plus faible afin de compenser la modification du rayon de courbure volontairement choisi. L'intérêt d'un tel procédé tient au fait que dans ce dernier cas, le dioptre agissant est noyé au coeur d'un dispositif intégrant deux composants transparents à deux indices différents. Le réseau lenticulaire peut dans ce cas être totalement inclus entre deux surfaces plates. D'un côté, la surface de l'écran et de l'autre une plaque de verre ou de plastique comme plaque de protection et de finition, soit légèrement dépolie soit antireflet ou autre.

## Revendications

1. Procédé de fabrication d'un écran d'affichage d'une image autostéréoscopique comprenant les étapes consistant à :
- sélectionner (E10) une dalle de pixels agencés par lignes et par colonnes, chaque pixel étant composé d'une pluralité de sous-pixels de couleurs différentes,
- sélectionner (E11) un film de polarisation présentant un premier axe optique,
- fabriquer un réseau lenticulaire directement sur ledit film de polarisation sélectionné pour former un film composite, dit film optique, ledit réseau lenticulaire présentant un deuxième axe optique,
- coller (E15) ledit film optique sur ladite dalle de pixels sélectionnée de manière à obtenir un écran d'affichage polarisant et lenticulaire présentant deux axes optiques associés respectivement à une fonction de polarisation et une fonction autostéréoscopique.

2. Procédé selon la revendication 1, **caractérisé en ce que** ladite étape de fabrication d'un réseau lenticulaire directement sur ledit film de polarisation comprend les sous-étapes consistant à :
- appliquer (E12) une couche de résine transparente polymérisable sur ledit film de polarisation,
- implanter (E13) ledit réseau lenticulaire dans ladite couche de résine polymérisable,
- polymériser (E14) ladite résine polymérisable de manière à obtenir un film composite transparent et stable intégrant ledit réseau lenticulaire.

3. Procédé selon la revendication 2, **caractérisé en ce que** ladite résine transparente polymérisable est une résine mono composant ou bi-composants, polymérisable par UV ou par réaction chimique suite à un mélange avec un autre composant, ou par apport de chaleur.

4. Procédé selon l'une des revendications 2 ou 3, **caractérisé en ce que** ladite étape consistant à implanter (E13) ledit réseau lenticulaire dans ladite couche de résine polymérisable consiste à laminer ledit film de polarisation avec un cylindre gravé aux formes et dimensions du réseau lenticulaire souhaité.

5. Procédé selon l'une des revendications 2 ou 3, **caractérisé en ce que** ladite étape consistant à implanter (E13) ledit réseau lenticulaire dans ladite couche de résine polymérisable consiste à imprimer ledit film de polarisation au moyen d'une imprimante à vernis UV un motif aux formes et dimensions du réseau lenticulaire souhaité.

6. Procédé selon l'une des revendications 2 ou 3, **caractérisé en ce que** ladite étape consistant à implanter (E13) ledit réseau lenticulaire dans ladite couche de résine polymérisable consiste à sérigraphier ledit film de polarisation aux formes et dimensions du réseau lenticulaire souhaité.

7. Procédé selon l'une des revendications 2 ou 3, **caractérisé en ce que** ladite étape consistant à implanter (E13) ledit réseau lenticulaire dans ladite couche de résine polymérisable consiste à appliquer sur ledit film de polarisation un moule aux formes et dimensions du réseau lenticulaire souhaité.

8. Procédé selon l'une des revendications 1 à 7, **caractérisé en ce que** ledit film de polarisation sélectionné est formé d'un film d'oxyde de polyvinyle étiré et laminé entre deux films de tri acétate de cellulose.

9. Procédé de transformation d'un écran d'affichage d'une image bidimensionnelle, dit écran 2D, en un écran d'affichage d'une image autostéréoscopique, dit écran 3D, ledit écran 2D comprenant au moins une couche de cristaux liquides formant une dalle de pixels, surmontée au moins d'un film de polarisation, ledit procédé comprenant les étapes consistant à :
- décoller ledit film de polarisation dudit écran 2D,
- sélectionner un film de polarisation,
- fabriquer un réseau lenticulaire directement sur ledit film de polarisation sélectionné pour former un film, dit film optique,
- coller ledit film optique directement sur ladite dalle de pixels dudit écran 2D.

10. Procédé de transformation selon la revendication 9, **caractérisé en ce que** ladite étape de fabrication d'un réseau lenticulaire directement sur ledit film de polarisation comprend les sous-étapes consistant à :
- appliquer une couche de résine transparente polymérisable sur ledit film de polarisation,
- implanter ledit réseau lenticulaire dans ladite couche de résine polymérisable,
- polymériser ladite résine polymérisable de manière à obtenir un film composite transparent et stable intégrant ledit réseau lenticulaire.

11. Procédé de fabrication d'un réseau lenticulaire sur un film de polarisation, **caractérisé en ce qu'**il comprend les étapes consistant à :
- appliquer (E12) une couche de résine transparente polymérisable sur ledit film de polarisation,
- implanter (E13) ledit réseau lenticulaire dans ladite couche de résine polymérisable,
- polymériser (E14) ladite résine polymérisable de manière à obtenir un film composite transparent et stable intégrant ledit réseau lenticulaire.

## Patentansprüche

1. Verfahren zur Herstellung eines Bildschirms zur Anzeige eines autostereoskopischen Bildes, welches die Schritte umfasst:
- Auswählen (E10) eines Blocks von Pixeln, die in Zeilen und Spalten angeordnet sind, worin jedes Pixel aus mehreren Unterpixeln mit unterschiedlichen Farben zusammengesetzt ist,
- Auswählen (E11) einer Polarisationsfolie mit einer ersten optischen Achse,
- Herstellen einer linsenförmigen Anordnung direkt auf der ausgewählten Polarisationsfolie, um eine zusammengesetzte Folie, optische Folie genannt, auszubilden, worin die linsenförmige Anordnung eine zweite optische Achse aufweist,
- Verbinden (E15) der optischen Folie mit dem ausgewählten Block von Pixeln, um einen polarisierenden und linsenförmigen Anzeige-Bildschirm zu erhalten, der zwei optische Achsen aufweist, die jeweils mit einer Polarisationsfunktion und einer autostereoskopischen Funktion verbunden sind.

2. Verfahren nach Anspruch 1, **dadurch gekennzeichnet, dass** der Schritt der Herstellung einer linsenförmigen Anordnung direkt auf der Polarisationsfolie die Unterschritte umfasst:
- Auftragen (E12) einer Schicht aus transparentem polymerisierbarem Harz auf die Polarisationsfolie,
- Implantieren (E13) der linsenförmigen Anordnung in die Schicht aus polymerisierbarem Harz,
- Polymerisieren (E14) des polymerisierbaren Harzes, um eine transparente und stabile Verbundfolie zu erhalten, die die linsenförmige Anordnung integriert.

3. Verfahren nach Anspruch 2, **dadurch gekennzeichnet, dass** das transparente polymerisierbare Harz ein Harz (einkomponentig oder zweikomponentig) ist, das durch UV oder durch eine chemische Reaktion nach Vermischung mit einer anderen Komponente, oder durch Wärmezufuhr polymerisierbar ist.

4. Verfahren nach einem der Ansprüche 2 oder 3, **dadurch gekennzeichnet, dass** der Schritt des Implantierens der linsenförmigen Anordnung in die polymerisierbare Harzschicht (E13) darin besteht, die Polarisationsfolie mit einem Zylinder zu laminieren, in den die Formen und Abmessungen der gewünschten linsenförmigen Anordnung eingraviert sind.

5. Verfahren nach einem der Ansprüche 2 oder 3, **dadurch gekennzeichnet, dass** der Schritt des Implantierens der linsenförmigen Anordnung in die polymerisierbare Harzschicht (E13) darin besteht, die Polarisationsfolie mit Hilfe eines UV-Lackdruckers mit einem Muster in den Formen und Abmessungen der gewünschten linsenförmigen Anordnung zu bedrucken.

6. Verfahren nach einem der Ansprüche 2 oder 3, **dadurch gekennzeichnet, dass** der Schritt des Implantierens der linsenförmigen Anordnung in die polymerisierbare Harzschicht (E13) darin besteht, die Polarisationsfolie im Siebdruckverfahren in den Formen und Abmessungen der gewünschten linsenförmigen Anordnung zu drucken.

7. Verfahren nach einem der Ansprüche 2 oder 3, **dadurch gekennzeichnet, dass** der Schritt des Implantierens der linsenförmigen Anordnung in die polymerisierbare Harzschicht (E13) darin besteht, eine Form auf die Polarisationsfolie in den Formen und Abmessungen der gewünschten linsenförmigen Anordnung aufzubringen.

8. Verfahren nach einem der Ansprüche 1 bis 7, **dadurch gekennzeichnet, dass** die ausgewählte Polarisationsfolie aus einer Folie aus Polyvinyloxid ausgebildet wird, die zwischen zwei Folien aus Zellulosetriacetat gestreckt und laminiert ist.

9. Verfahren zur Umwandlung eines Bildschirms zur Anzeige eines zweidimensionalen Bildes, 2D-Bildschirm genannt, in einen Bildschirm zur Anzeige eines autostereoskopischen Bildes, 3D-Bildschirm genannt, worin der 2D-Bildschirm mindestens eine Schicht aus Flüssigkristallen umfasst, die einen Pixelblock ausbilden, der mindestens von einer Polarisationsfolie überlagert ist, wobei das Verfahren die Schritte umfasst:
- Abziehen der Polarisationsfolie von dem 2D-Bildschirm,
- Auswählen einer Polarisationsfolie,
- Herstellen einer linsenförmigen Anordnung direkt auf der ausgewählten Polarisationsfolie, um eine Folie, optische Folie genannt, auszubilden,
- Verbinden der optischen Folie direkt mit dem Pixelblock des 2D-Bildschirms.

10. Umwandlungsverfahren nach Anspruch 9, **dadurch gekennzeichnet, dass** der Schritt zur Herstellung einer linsenförmigen Anordnung direkt auf der Polarisationsfolie die Teilschritte umfasst, die bestehen aus:
- Aufbringen einer Schicht aus transparentem polymerisierbarem Harz auf der Polarisationsfolie,
- Implantieren der linsenförmigen Anordnung in die Schicht aus polymerisierbarem Harz,
- Polymerisieren des polymerisierbaren Harzes, um einen transparente und stabile Verbundfolie zu erhalten, der die linsenförmige Anordnung integriert.

11. Verfahren zur Herstellung einer linsenförmigen Anordnung auf einer Polarisationsfolie, **dadurch gekennzeichnet, dass** es die Schritte umfasst:
- Aufbringen (E12) einer Schicht aus transparentem polymerisierbarem Harz auf die Polarisationsfolie,
- Implantieren (E13) der linsenförmigen Anordnung in die Schicht aus polymerisierbarem Harz,
- Polymerisieren (E14) des polymerisierbaren Harzes, um eine transparente und stabile Verbundfolie zu erhalten, der die linsenförmige Anordnung integriert.

## Claims

1. Method for manufacturing a screen for displaying an auto stereoscopic image, comprising the steps of:
- selecting (E10) a block of pixels which are arranged in rows and by columns, each pixel being composed of a plurality of sub-pixels of different colors,
- selecting (E11) a polarization film having a first optical axis,
- manufacturing a lenticular array directly on said selected polarization film to form a composite film, called optical film, said lenticular array having a second optical axis,
- bonding (E15) said optical film on said selected block of pixels so as to obtain a polarizing and lenticular display screen having two optical axes associated respectively with a polarization function and an autostereoscopic function.

2. Method according to claim 1, **characterized in that** said step for manufacturing a lenticular array directly on said polarization film comprises the sub-steps consisting in:
- applying (E12) a layer of transparent polymerizable resin on said polarization film,
- implanting (E13) said lenticular array in said layer of polymerizable resin,
- polymerizing (E14) said polymerizable resin so as to obtain a transparent and stable composite film integrating said lenticular array.

3. Method according to claim 2, **characterized in that** said transparent polymerizable resin is a resin (one-component or two-component), polymerizable by UV or by chemical reaction following mixing with another component, or by the addition of heat.

4. Method according to one of claims 2 or 3, **characterized in that** said step consisting in implanting (E13) said lenticular array in said polymerizable resin layer consists in laminating said polarization film with a cylinder engraved with the shapes and dimensions of the desired lenticular array.

5. Method according to one of claims 2 or 3, **characterized in that** said step consisting in implanting (E13) said lenticular array in said polymerizable resin layer consists in printing said polarization film by means of a UV varnish printer a pattern in the shapes and dimensions of the desired lenticular array.

6. Method according to one of claims 2 or 3, **characterized in that** said step consisting in implanting (E13) said lenticular array in said polymerizable resin layer consists in screen printing said polarization film in the shapes and dimensions of the desired lenticular array.

7. Method according to one of claims 2 or 3, **characterized in that** said step consisting in implanting (E13) said lenticular array in said polymerizable resin layer consists in applying a mold on said polarization film in the shapes and dimensions of the desired lenticular array.

8. Method according to one of claims 1 to 7, **characterized in that** said selected polarization film is formed from a film of polyvinyl oxide stretched and laminated between two films of cellulose triacetate.

9. Method for converting a screen for displaying a two-dimensional image, called a 2D screen, into a screen for displaying an autostereoscopic image, called a 3D screen, said 2D screen comprising at least one layer of liquid crystals forming a block of pixels, overlaid at least by a polarization film, said method comprising the steps of:
- peeling said polarization film off of said 2D screen,
- selecting a polarization film,
- manufacturing a lenticular array directly on said selected polarization film to form a film, called optical film,
- bonding said optical film directly onto said block of pixels of said 2D screen.

10. Conversion method according to claim 9, **characterized in that** said step for manufacturing a lenticular array directly on said polarization film comprises the sub-steps consisting in:
- applying a layer of transparent polymerizable resin on said polarization film,
- implanting said lenticular array in said layer of polymerizable resin,
- polymerizing said polymerizable resin so as to obtain a transparent and stable composite film integrating said lenticular array.

11. Method for manufacturing a lenticular array on a polarization film, **characterized in that** it comprises the steps consisting in:
- applying (E12) a layer of transparent polymerizable resin on said polarization film,
- implanting (E13) said lenticular array in said layer of polymerizable resin,
- polymerizing (E14) said polymerizable resin so as to obtain a transparent and stable composite film integrating said lenticular array.
